# EUROPÄISCHE PATENTSCHRIFT

(11) **EP 0 790 809 B1**
(45) Veröffentlichungstag und Bekanntmachung des Hinweises auf die Patenterteilung: **09.12.1998**
(21) Anmeldenummer: 95936495.1
(22) Anmeldetag: 14.10.1995
(51) Int. Cl.: A61C 17/22, A46B 15/00

(54) **ZAHNBÜRSTE UND VERFAHREN ZUR ANZEIGE DER PUTZZEITDAUER**
TOOTHBRUSH AND PROCESS FOR INDICATING THE CLEANING TIME
BROSSE A DENTS ET PROCEDE POUR INDIQUER LA DUREE DU BROSSAGE

(30) Priorität: 08.11.1994 DE 4439835
(43) Veröffentlichungstag der Anmeldung: 27.08.1997
(73) Patentinhaber: Braun Aktiengesellschaft, Frankfurt am Main (DE)
(72) Erfinder: JUNG, Philipp, D-64291 Darmstadt (DE)
(74) Vertreter: Vorbeck, Wolfgang Ernst August, Dr.
(86) Internationale Anmeldenummer: EP9504046
(87) Internationale Veröffentlichungsnummer: WO9614025

(56) Entgegenhaltungen:
- DE-A- 3 117 160
- DE-A- 3 309 687
- DE-A- 3 433 250
- DE-A- 4 029 770
- GB-A- 2 243 569
- GB-A- 2 252 234
- PATENT ABSTRACTS OF JAPAN vol. 017 no. 158 (C-1041) ,29.März 1993 & JP,A,04 322604 (TOKYO ELECTRIC CO LTD) 12.November 1992,

## Beschreibung

Die Erfindung betrifft eine elektrische Zahnbürste mit einem Zeitschaltglied, das dazu dient, einem Benutzer nach dem Einschalten der elektrischen Zahnbürste den Ablauf einer ersten Zeitdauer anzuzeigen, wobei ein Ein/Ausschalter vorgesehen ist, der von dem Zeitschaltglied ansteuerbar ist und mit dem die elektrische Zahnbürste ein- und ausgeschaltet werden kann.

Eine elektrische Zahnbürste gemäß dem Oberbegriff von Anspruch 1 ist aus der deutschen Offenlegungsschrift DE 33 09 687 A1 bekannt. Dort ist ein Zeitschalter vorgesehen, der - ausgehend vom Einschalten der elektrischen Zahnbürste - nach einer vorgegebenen Zeitdauer für einen Benutzer wahrnehmbare Signale abgibt. Die Signale dienen dazu, dem Benutzer das Ende der Putzzeit anzuzeigen. Bei den Signalen handelt es sich um akustische und/oder optische Signale, mit denen der Benutzer auf das Ende der optimalen Putzdauer hingewiesen werden soll. Des weiteren ist beschrieben, daß die elektrische Zahnbürste nach Ablauf der vorgegebenen Zeitdauer einfach automatisch abgeschaltet werden kann.

Aufgabe der Erfindung ist es, eine elektrische Zahnbürste zu schaffen, die im Hinblick auf die Anzeige des Ablaufs der Putzzeit weiter verbessert ist.

Gelöst wird diese Aufgabe bei einer elektrischen Zahnbürste der eingangs genannten Art durch die im Kennzeichen von Anspruch 1 angegebenen Merkmale.

Nach Ablauf der ersten Zeitdauer, also beispielsweise am Ende der Gesamt-Putzzeit oder der Putzzeit für einen bestimmten Zahnbereich, wird die elektrische Zahnbürste mehrfach, insbesondere kurzzeitig, aus- und wieder eingeschaltet. Dieses Ein- und Ausschalten wird über den Zeitraum der zweiten Zeitdauer aufrechterhalten. Die elektrische Zahnbürste wird also von einem gleichförmigen Einschaltzustand in einen ungleichförmigen Wechselzustand versetzt. Dieser Übergang wird von einem Benutzer aufgrund der veränderten Vibrationen des Handgriffs und des Putzkopfes der elektrischen Zahnbürste unmittelbar zur Kenntnis genommen. Der Benutzer erkennt also das Ende der Putzzeit allein aufgrund der veränderten Betriebsweise, d. h. der gezielt veränderten Vibration der elektrischen Zahnbürste bzw. des Handstückes. Der Benutzer ist daher nicht mehr darauf angewiesen, eine akustische oder optische Anzeige zu beachten, sondern "spürt" das Ende der Putzzeit ohne weiteres "in der Hand und im Mund''.

Als vorteilhafte Werte haben sich etwa zwei Minuten für die erste Zeitdauer, also für die optimale Putzzeit, und etwa 5 bis 10 Sekunden für die zweite Zeitdauer, also für die Zeitdauer, in der das Ende der Putzzeit angezeigt wird, herausgestellt.

Als vorteilhaftes Einschalt- bzw. Ausschaltintervall hat sich eine Zeitdauer von etwa 0,5 Sekunden herausgestellt.

Bei einer vorteilhaften Weiterbildung der Erfindung ist vorgesehen, daß das Zeitschaltglied den Ein/Ausschalter derart ansteuert, daß nach Ablauf der zweiten Zeitdauer wieder die erste Zeitdauer gestartet wird. Die elektrische Zahnbürste wird demnach nach Ablauf der Putzzeit sowie nach Ablauf der Zeitdauer, in der auf das Ende der Putzzeit hingewiesen wird, selbsttätig wieder in den engeschalteten Betriebszustand versetzt. Dies hat den Vorteil, daß der Benutzer, falls er die eingestellte Putzzeit überschreiten will, dies ohne weitere Maßnahmen, insbesondere ohne ein erneutes manuelles Einschalten der elektrischen Zahnbürste, durchführen kann.

Vorteilhafte Ausgestaltungen der Erfindung bestehen darin, daß das Zeitschaltglied als ein oder als mehrere digitale integrierte Bausteine realisiert ist, und/oder daß der Ein/Ausschalter als Transistor realisiert ist. Dadurch wird erreicht, daß sämtliche, für die Ausführung der Erfindung erforderlichen Bauteile ohne weiteres in dem Gehäuse der elektrischen Zahnbürste untergebracht werden können.

Bei einer Weiterbildung der Erfindung ist ein weiterer Ein/Ausschalter vorgesehen, mit dem der Benutzer die elektrische Zahnbürste einschalten und damit die erste Zeitdauer starten kann, und mit dem der Benutzer die elektrische Zahnbürste beliebig ausschalten kann. Bei dem weiteren Ein/Ausschalter kann es sich insbesondere um einen mechanischen Ein/Ausschalter handeln. Mit diesem ist es dem Benutzer möglich, die elektrische Zahnbürste zum Gebrauch ein- und auszuschalten. Für den Benutzer ändert sich somit die übliche Bedienung der elektrischen Zahnbürste nicht.

Die Erfindung betrifft auch ein vorteilhaftes Verfahren zur Anzeige der Putzzeitdauer gemäß den Verfahrensansprüchen.

Weitere Merkmale, Vorteile und Anwendungsmöglichkeiten der Erfindung ergeben sich aus der nachfolgenden Beschreibung von Ausführungsbeispielen, die in der Zeichnung näher dargestellt sind.
- Fig. 1: zeigt in einer schematischen Darstellung ein Schaltbild eines elektrischen Antriebs mit zugehöriger Antriebssteuerung einer elektrischen Zahnbürste nach der Erfindung,
- Fig. 2: zeigt in einer schematischen Darstellung ein Zeitdiagramm mit den ein- und ausgeschalteten Betriebszuständen der elektrischen Zahnbürste nach der Fig. 1, und
- Fig. 3: zeigt in einer schematischen Darstellung ein Schaltbild der Antriebssteuerung der elektrischen Zahnbürste nach der Fig. 1.

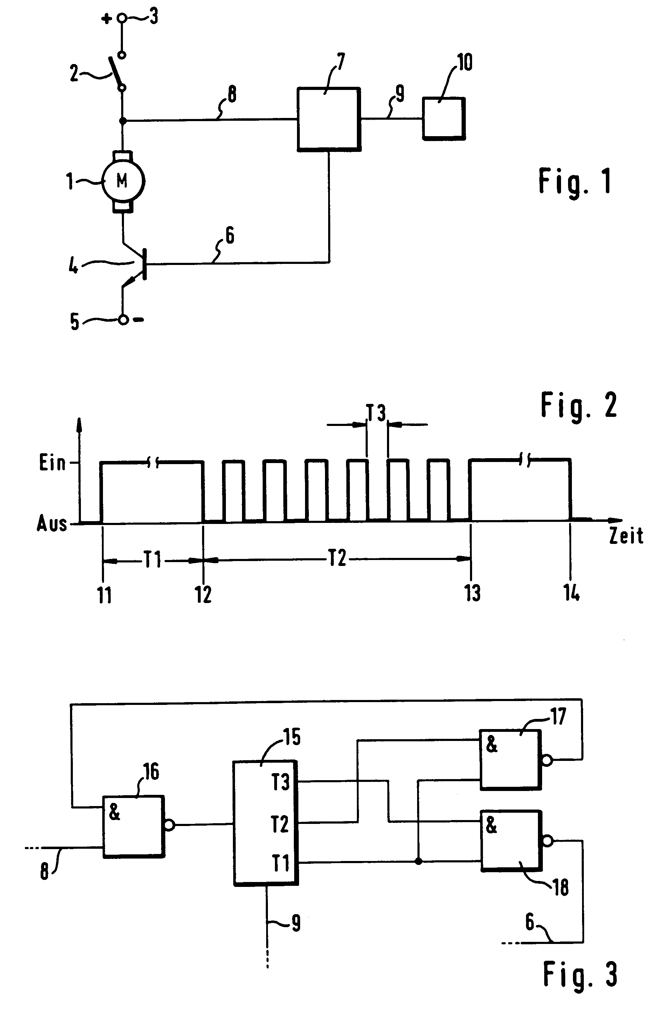

In der Fig. 1 ist ein Elektromotor 1 für eine elektrische Zahnbürste dargestellt, der über einen insbesondere mechanischen Ein/Ausschalter 2 mit dem Pluspol 3 einer elektrischen Spannungsquelle, insbesondere eines Akkumulators verbunden ist, und der über einen insbesondere elektronischen Ein/Ausschalter 4, vorzugsweise einen Transistor oder einen Leistungstransistor mit dem Minuspol 5 der genannten Spannungsquelle verbunden ist. Der Ein/Ausschalter 2 wird durch einen Benutzer betätigt und dient zum Ein- und Ausschalten der elektrischen Zahnbürste. Der Ein/Ausschalter 4 wird über eine Leitung 6 von einem Zeitschaltglied 7 angesteuert. Ist als Ein/Ausschalter 4 ein Transistor vorgesehen, so ist die Leitung 6 mit der Basis des Transistors verbunden.

Das Zeitschaltglied 7 ist über eine Leitung 8 mit einem Verbindungspunkt zwischen dem Elektromotor 1 und dem Ein/Ausschalter 2 verbunden. Des weiteren ist das Zeitschaltglied 7 über eine Leitung 9 mit einem Zeitgeber 10 verbunden. Der Zeitgeber 10 erzeugt einen gleichbleibenden Zeittakt, der über die Leitung 9 an das Zeitschaltglied 7 weitergegeben wird, und der vom Zeitschaltglied 7 als Zeitbasis verwendet wird.

Anhand der Fig. 2 wird nachfolgend die Funktionsweise des in der Fig. 1 dargestellten Elektromotors 1 und des zugehörigen Zeitschaltglieds 7 der elektrischen Zahnbürste erläutert. Auf der Abszisse des in der Fig. 2 dargestellten Zeitdiagramms ist die Zeit abgetragen und auf der Ordinate der eingeschaltete oder ausgeschaltete Betriebszustand des Elektromotors 1 bzw. der elektrischen Zahnbürste. Die auf der Abszisse des Zeitdiagramms wiedergegebenen Zeitintervalle sind nicht maßstäblich dargestellt.

In einem Zeitpunkt 11 wird der Elektromotor 1 und damit die elektrische Zahnbürste von dem Benutzer mit Hilfe des Ein/Ausschalters 2 eingeschaltet. Dies ist möglich, da der Ein/Ausschalter 4 sich in seinem geschlossenen Zustand befindet und damit ein Strom vom Pluspol 3 über den Elektromotor 1 zum Minuspol 5 fließen kann.

Dieser eingeschaltete Betriebszustand der elektrischen Zahnbürste wird über eine erste Zeitdauer T1 aufrechterhalten und endet somit in einem Zeitpunkt 12. Die erste Zeitdauer T1 stellt eine vorgegebene Putzdauer dar und entspricht vorzugsweise einer optimalen Putzzeit. Diese erste Zeitdauer kann beispielsweise auf etwa zwei Minuten eingestellt sein.

Das Zeitschaltglied 7 erkennt das Ende der ersten Zeitdauer T1 und teilt dies durch eine Änderung der Betriebsweise der elektrischen Zahnbürste dem Benutzer mit. Zu diesem Zweck schaltet das Zeitschaltglied 7 den Elektromotor 1 und damit die elektrische Zahnbürste mittels des Ein/Ausschalters 4 mehrmals aus und wieder ein. Dieses Aus- und Einschalten der elektrischen Zahnbürste wird von dem Zeitschaltglied 7 über eine zweite Zeitdauer T2 aufrechterhalten und endet somit in einem Zeitpunkt 13. Die zweite Zeitdauer T2 stellt diejenige Zeitdauer dar, in der das Ende der ersten Zeitdauer T1, also das Ende der vorgegebenen Putzdauer dem Benutzer durch das mehrmalige Ein- und Ausschalten angezeigt wird. Diese zweite Zeitdauer T2 ist kleiner als die erste Zeitdauer T1 und kann beispielsweise etwa 7 bis 8 Sekunden lang sein.

Die Ein- und Ausschaltintervalle, in denen die elektrische Zahnbürste während der zweiten Zeitdauer T2 ein- und ausgeschaltet ist, weisen jeweils eine Zeitdauer T3 auf. Diese Zeitdauer T3 ist kleiner als die zweite Zeitdauer T2 und ist 0,3 Sekunden bis 1 Sekunde lang. Es versteht sich, daß die Ein- und Ausschaltintervalle auch unterschiedliche Längen haben können.

Das Zeitschaltglied 7 erkennt das Ende der zweiten Zeitdauer T2 und steuert wieder die Betriebsweise der elektrischen Zahnbürste entsprechend der ersten Zeitdauer T1 in den "Ein"-Zustand. Der Ein/Ausschalter 4 befindet sich demzufolge in seinem geschlossenen Zustand. Der Benutzer kann die elektrische Zahnbürste weiterbenutzen und entweder, wie dies in der Fig. 2 dargestellt ist, zu einem Zeitpunkt 14 die elektrische Zahnbürste mit Hilfe des Ein/Ausschalters 2 ausschalten oder die elektrische Zahnbürste so lange weiterbenutzen, bis ihm der erneute Ablauf der ersten Zeitdauer T1 in der beschriebenen Art und Weise angezeigt wird.

In der Fig. 3 ist eine mögliche Ausführungsform des Zeitschaltglieds 7 dargestellt. Ein Intervallgeber 15 ist über die Leitung 9 mit dem Zeitgeber 10 verbunden. Des weiteren ist der Intervallgeber 15 mit dem Ausgang eines NAND-Gatters 16 verbunden, dessen erster Eingang über die Leitung 8 mit dem Verbindungspunkt zwischen dem Elektromotor 1 und dem Ein/Ausschalter 2 verbunden ist.

Der Intervallgeber 15 weist drei Ausgänge auf, die der ersten Zeitdauer T1, der zweiten Zeitdauer T2 und den Ein- bzw. Ausschaltintervallen T3 zugeordnet sind. Der der ersten Zeitdauer T1 zugeordnete Ausgang ist mit jeweils dem ersten Eingang zweier NAND-Gatters 17, 18 verbunden. Der der zweiten Zeitdauer T2 zugeordnete Ausgang des Intervallgebers 15 ist mit dem zweiten Eingang des NAND-Gatters 17 und der den Ein- bzw. Ausschaltintervallen T3 zugeordnete Ausgang des Intervallgebers 15 ist mit dem zweiten Eingang des NAND-Gatters 18 verbunden. Der Ausgang des NAND-Gatters 17 ist mit dem zweiten Eingang des NAND-Gatters 16 verbunden und der Ausgang des NAND-Gatters 18 ist an die Leitung 6 zu dem Ein/Ausschalter 4 angeschlossen.

Des weiteren ist der Intervallgeber 15 an die Leitung 9 zu dem Zeitgeber 10 angeschlossen.

Bei dem Intervallgeber 15 handelt es sich um einen digitalen integrierten Baustein. Gleiches gilt für die NAND-Gatter 16, 17, 18 und den Zeitgeber 10. Dabei ist es möglich, daß der Intervallgeber 15 und der Zeitgeber 10 auf einem Baustein integriert sind.

Schaltet der Benutzer die elektrische Zahnbürste mit Hilfe des Ein/Ausschalters 2 ein, so wird der Intervallgeber 15 aufgrund der Spannungsänderung auf der Leitung 8 über das NAND-Gatter 16 gestartet. Die Ausgänge der NAND-Gatter 17, 18 sind logisch "1". Der Ein/Ausschalter 4 ist dadurch in seinem geschlossenen Zustand. Nach Ablauf der Zeitdauer T1 schaltet der dieser Zeitdauer zugeordnete Ausgang des Intervallgebers 15 auf logisch "1". Schaltet nunmehr der den Ein- bzw. Ausschaltintervallen T3 zugeordnete Ausgang ebenfalls auf logisch "1", so schaltet der Ausgang des NAND-Gatter 18 auf logisch "0". Dadurch wird der Elektromotor 1 und damit die elektrische Zahnbürste über den Ein/Ausschalter 4 ausgeschaltet. Nach Ablauf der Zeitdauer T3 schaltet der zugeordnete Ausgang des Intervallgebers 15 wieder auf logisch "0", so daß die elektrische Zahnbürste wieder eingeschaltet wird. Die elektrische Zahnbürste wird somit abwechselnd aus- und eingeschaltet, wobei die Ein- und Ausschaltintervalle jeweils die Zeitdauer T3 aufweisen. Dieses Ein- und Ausschalten wiederholt sich so lange, bis der der Zeitdauer T2 zugeordnete Ausgang des Intervallgebers 15 auf logisch "1" schaltet. Dies hat zur Folge, daß beide Eingänge des NAND-Gatters 17 logisch "1" sind und somit der Ausgang auf logisch "0" schaltet. Damit wird zumindest kurzzeitig der Ausgang des NAND-Gatters 16 auf logisch "0" geschaltet, so daß der Intervallgeber 15 neu gestartet wird. Dies hat zur Folge, daß die Zeitdauer T1 und damit der gesamte beschriebene Ablauf erneut beginnt. Mit Hilfe des Ein/Ausschalter 2 kann der Benutzer, wie bereits erwähnt, die elektrische Zahnbürste abschalten.

## Patentansprüche

1. Elektrische Zahnbürste mit einem Zeitschaltglied (7), das dazu dient, einem Benutzer nach dem Einschalten der elektrischen Zahnbürste den Ablauf einer ersten Zeitdauer (T1) anzuzeigen, wobei ein Ein/Ausschalter (4) vorgesehen ist, der von dem Zeitschaltglied (7) ansteuerbar ist und mit dem die elektrische Zahnbürste nach Ablauf der ersten Zeitdauer (T1) während einer zweiten Zeitdauer (T2) aus- und einschaltbar ist, dadurch gekennzeichnet, daß das Zeitschaltglied (7) den Ein/Ausschalter (4) derart ansteuert, daß nach Ablauf der ersten Zeitdauer (T1) die elektrische Zahnbürste während der zweiten Zeitdauer (T2) mehrfach aus- und einschaltet und somit während der zweiten Zeitdauer (T2) in einen gegenüber der ersten Zeitdauer (T1) modifizierten, ungleichförmigen Wechselzustand versetzt wird, wobei die erste Zeitdauer (T1) etwa eine Minute bis 3 Minuten, bervorzugt etwa zwei Minuten, die zweite Zeitdauer (T2) etwa 3 bis 10 Sekunden, bevorzugt 7 bis 8 Sekunden, und die Zeitdauer (T3) eines Einschaltintervalls oder eines Ausschaltintervalls etwa 0,3 Sekunden bis 1 Sekunde, bevorzugt 0,5 Sekunden, beträgt.

2. Elektrische Zahnbürste nach Patentanspruch 1, dadurch gekennzeichnet, daß das Zeitschaltglied (7) den Ein/Ausschalter (4) derart ansteuert, daß nach Ablauf der zweiten Zeitdauer (T2) wieder die erste Zeitdauer (T1) gestartet wird.

3. Elektrische Zahnbürste nach einem der Patentansprüche 1 oder 2, dadurch gekennzeichnet, daß das Zeitschaltglied (7) als wenigstens ein digitaler integrierter Baustein ausgebildet ist.

4. Elektrische Zahnbürste nach einem der Patentansprüche 1 bis 3, dadurch gekennzeichnet, daß der Ein/Ausschalter (4) als Transistor ausgebildet ist.

5. Elektrische Zahnbürste nach einem der Patentansprüche 1 bis 4, dadurch gekennzeichnet, daß ein weiterer Ein/Ausschalter (2) vorgesehen ist, mit dem der Benutzer die elektrische Zahnbürste einschalten und damit die erste Zeitdauer (T1) starten kann, und mit dem der Benutzer die elektrische Zahnbürste beliebig ausschalten kann.

6. Verfahren zur Anzeige der Putzzeitdauer mit einer elektrischen Zahnbürste, wobei die Betriebsart der Zahnbürste nach einer einstellbaren ersten Zeitdauer (T1) selbsttätig änderbar ist, dadurch gekennzeichnet, daß die Zahnbürste nach Ablauf der ersten Zeitdauer (T1) während einer zweiten Zeitdauer (T2) mehrfach aus- und eingeschalltet wird, wobei die erst Zeitdauer (T1) etwa 1 Minute bis 3 Minuten, bevorzugt etwa 2 Minuten, die zweite Zeitdauer (T2) etwa 3 bis 10 Sekunden, bevorzugt 7 bis 8 Sekunden, und die Zeitdauer (T3) eines Einschaltintervalls oder eines Ausschaltintervalls etwa 0,3 Sekunden bis 1 Sekunde, bevorzugt 0,5 Sekunden, beträgt.

7. Verfahren nach Anspruch 6, dadurch gekennzeichnet, daß die Zahnbürste nach Ablauf der zweiten Zeitdauer (T2) für eine weitere erste Zeitdauer (T1) eingeschaltet wird.

## Claims

1. An electric toothbrush having a timing circuit (7) serving to signal to a user the expiration of a first period (T1) following activation of the electric toothbrush, with an On/Off switching device (4) being provided which is controllable by the timing circuit (7) and with which the electric toothbrush can be turned on and off following expiration of the first period (T1) during a second period (T2), **characterized in that** the timing circuit (7) controls the On/Off switching device (4) such that following expiration of the first period (T1) the electric toothbrush turns on and off repeatedly during the second period (T2) and is thus set to a non-uniform intermittent mode during the second period (T2) which is modified relative to the first period (T1), wherein the first period (T1) lasts about one to three minutes, preferably about two minutes, the second period (T2) about three to ten seconds, preferably seven to eight seconds, and the period (T3) of an On interval or an Off interval lasts about 0.3 seconds to one second, preferably 0.5 seconds.

2. The electric toothbrush as claimed in patent claim 1, **characterized in that** the timing circuit (7) controls the On/Off switching device (4) such that the first period (T1) is restarted following expiration of the second period (T2).

3. The electric toothbrush as claimed in any one of the patent claims 1 or 2, **characterized in that** the timing circuit (7) is configured as at least one digital integrated module.

4. The electric toothbrush as claimed in any one of the patent claims 1 to 3, **characterized in that** the On/Off switching device (4) is configured as a transistor.

5. The electric toothbrush as claimed in any one of the patent claims 1 to 4, **characterized in that** a further On/Off switch (2) is provided enabling the user to turn the electric toothbrush on, thus starting the first period (T1), and enabling the user to turn the electric toothbrush off as desired.

6. A method of signaling the brushing time with an electric toothbrush, in which the mode of operation of the toothbrush is variable automatically following an adjustable first period (T1), **characterized in that** the toothbrush is turned on and off repeatedly during a second period (T2) after the first period (T1) has elapsed, wherein the first period (T1) lasts about one to three minutes, preferably about two minutes, the second period (T2) about three to ten seconds, preferably seven to eight seconds, and the period (T3) of an On interval or an Off interval lasts about 0.3 seconds to one second, preferably 0.5 seconds.

7. The method as claimed in claim 6, **characterized in that** the toothbrush is turned on for another first period (T1) following expiration of the second period (T2).

## Revendications

1. Brosse à dents électrique comportant un élément de commutation temporisé (7) qui sert à indiquer à un utilisateur, après l'enclenchement de la brosse à dents électrique, l'écoulement d'une première durée (T1), dans laquelle est prévu un commutateur de marche/arrêt (4) qui peut être commandé par l'élément de commutation temporisé (7) et par lequel la brosse à dents électrique peut être arrêtée et mise en marche, pendant une seconde durée (T2) après l'écoulement de la première durée (T1), ***caractérisée en ce que*** l'élément de commutation temporisé (7) commande le commutateur de marche/arrêt (4) de façon à ce qu'après l'écoulement de la première durée (T1), la brosse à dents électrique soit arrêtée et enclenchée plusieurs fois pendant la seconde durée (T2) et qu'ainsi, pendant la seconde durée (T2), elle soit mise dans un état alterné irrégulier modifié par rapport à celui de la première durée (T1), la première durée (T1) étant d'approximativement une minute à trois minutes, de préférence d'approximativement deux minutes, la seconde durée (T2) étant d'approximativement trois à dix secondes, de préférence de sept à huit secondes et la durée (T3) d'un intervalle d'enclenchement ou d'un intervalle d'arrêt étant d'approximativement 0,3 seconde à 1 seconde, de préférence de 0,5 seconde.

2. Brosse à dents électrique suivant la revendication 1, caractérisée en ce que l'élément de commutation temporisé (7) commande le commutateur de marche/arrêt (4) de façon à ce qu'après l'écoulement de la seconde durée (T2), la première durée (T1) soit à nouveau amorcée.

3. Brosse à dents électrique suivant l'une des revendications 1 et 2, caractérisée en ce que l'élément de commutation temporisé (7) est réalisé sous la forme d'au moins un composant numérique intégré.

4. Brosse à dents électrique suivant l'une des revendications 1 à 3, caractérisée en ce que le commutateur de marche/arrêt (4) est réalisé sous forme d'un transistor.

5. Brosse à dents électrique suivant l'une des revendications 1 à 4, caractérisée en ce qu'il est prévu un autre commutateur de marche/arrêt (2) avec lequel l'utilisateur peut enclencher la brosse à dents électrique, et ainsi amorcer la première durée (T1), et avec lequel l'utilisateur peut arrêter au choix la brosse à dents électrique.

6. Procédé pour l'indication de la durée de nettoyage avec une brosse à dents électrique, dans lequel le mode de fonctionnement de la brosse à dents électrique peut être modifié automatiquement après une première durée (T1) réglable, caractérisé en ce qu'après l'écoulement de la première durée (T1), la brosse à dents électrique est arrêtée et enclenchée plusieurs fois pendant une seconde durée (T2), la première durée (T1) étant d'approximativement une minute à trois minutes, de préférence d'approximativement deux minutes, la seconde durée (T2) étant d'approximativement trois à dix secondes, de préférence de sept à huit secondes et la durée (T3) d'un intervalle de marche ou d'un intervalle d'arrêt étant d'approximativement 0,3 seconde à 1 seconde de préférence de 0,5 seconde.

7. Procédé suivant la revendication 6, caractérisé en ce qu'après l'écoulement de la deuxième durée (T2), la brosse à dents électrique est enclenchée pour une autre première durée (T1).
